# EUROPEAN PATENT APPLICATION

(11) **EP 3 683 261 A1**
(43) Date of publication of application: **22.07.2020**
(21) Application number: 18856047.8
(22) Date of filing: 25.07.2018
(51) Int. Cl.: C08L 15/00, C08K 3/36, C08K 5/541, C09K 3/10, F25B 1/00

(54) **HYDROGENATED NBR COMPOSITION**

(30) Priority: 15.09.2017 JP 2017178075
(71) Applicant: NOK Corporation, Tokyo 105-8585 (JP)
(72) Inventor: MURAKAMI Hideyuki, Fujisawa-shi Kanagawa 251-0042 (JP)
(74) Representative: Gerauer, Marc Philippé
(86) International application number: PCT/JP2018/027940
(87) International publication number: WO 2019/054058

(57) **Abstract**

A hydrogenated NBR composition comprising 40 to 80 parts by weight of silica having a BET specific surface area of 40 to 100 m²/g, and 0.5 to 3 parts by weight of a silane coupling agent, based on 100 parts by weight of a hydrogenated NBR blend of 35 to 50 wt.% of medium- to high-nitrile-content hydrogenated NBR having an acrylonitrile content of 30 to 38%, and 65 to 50 wt.% of high-nitrile-content hydrogenated NBR having an acrylonitrile content of 40 to 46%. Due to the use of medium- to high-nitrile-content hydrogenated NBR and high-nitrile-content hydrogenated NBR as a blend, both foaming resistance to HFC134a and swelling resistance to POE oil can be achieved. Further, due to the use of silane having a specific BET specific surface area and a silane coupling agent, desired compression set characteristics and abrasion resistance of the product can be secured. That is, the hydrogenated NBR composition satisfies various characteristics required for product functions with respect to HFC134a/PAG oil and HFO1234yf/POE oil.

## Description

### TECHNICAL FIELD

The present invention relates to a hydrogenated NBR composition. More particularly, the present invention relates to a hydrogenated NBR composition that can be effectively used, for example, as a crosslinking molding material for sealing materials of compressors for HFC134a/PAG oil and HFO1234yf/POE oil.

### BACKGROUND ART

Air conditioner refrigerants, such as HFC134a and HFO1234yf, are used in combination with refrigerator oils or assembling oils, such as polyalkylene glycol oil (PAG oil) or polyol ester oil (POE oil).

Conventionally, HFC134a/PAG oil is used as an air conditioner refrigerant/refrigerator oil; however, HFC134a has a global warming potential GWP as high as 1300. Accordingly, HFO1234yf is released as a refrigerant with a low GWP, and studies have been conducted toward the practical application thereof.

Hydrogenated NBR is mainly used as a lip seal material for HFC134a/PAG oil; however, conventional hydrogenated NBR materials in the use environment of HFO1234yf/POE oil excessively swell, compared with the use environment of HFC134a/PAG oil. It is the actual situation that the abrasion resistance of these materials as lip seals is inferior.

Further, in the transitional phase from HFC134a/PAG oil to HFO1234yf/POE oil, misuse of HFC134a/PAG oil during exchange of the refrigerant/refrigerator oil is fully considered; thus, performance security, particularly foaming resistance to HFC134a, in the use environment of HFC134a/PAG oil is required.

Moreover, hydrogenated NBR materials that are restrained from swelling by POE oil, which is used together with HFO1234yf, have low foaming resistance to HFC134a. Thus, by means of such a combination, it is difficult to satisfy both swelling resistance and foaming resistance. That is, swelling to POE oil is large, and swelling becomes larger when HFO1234yf is further mixed; thus, POE oil resistance is problematic as a material.

In addition, abrasion resistance is also required, in terms of the required function of the product. Accordingly, fillers having strong reinforcing properties are preferred; however, if a filler with high reinforcing properties is highly filled, desired compression set characteristics cannot be obtained.

The present applicant has previously made the following proposals.
(1) A hydrogenated NBR composition comprising hydrogenated NBR having a bound AN content of 15 to 30 wt.%, white carbon having a specific surface area (based on the nitrogen adsorption method) of 200 m²/g or less, an organic peroxide, and preferably a polyfunctional unsaturated compound (Patent Document 1). This hydrogenated NBR composition improves the heat resistance and low temperature characteristics thereof, while hardly impairing mechanical strength (normal state physical properties) and oil resistance inherent in hydrogenated NBR.
(2) A hydrogenated NBR-based seal molding material for R152a and R134a, comprising hydrogenated NBR having a bound AN content of 31 to 45 wt.%, carbon black having a particle diameter of 25 to 500 nm, white carbon having a specific surface area (based on the nitrogen adsorption method) of 30 to 200 m²/g, a silane coupling agent, and an organic peroxide (Patent Document 2). This hydrogenated NBR-based seal molding material has excellent resistance to both refrigerants R152a and R134a, as well as to all refrigerator oils and assembling oils used for these refrigerants.
(3) A hydrogenated NBR-based seal molding material for R152a and R134a, comprising hydrogenated NBR having a bound AN content of 31 to 45 wt.%, white carbon having a specific surface area (based on the nitrogen adsorption method) of 30 to 200 m²/g, a silane coupling agent, and an organic peroxide (Patent Document 3). This hydrogenated NBR-based seal molding material has excellent resistance to both refrigerants R152a and R134a, as well as to all refrigerator oils and assembling oils used for these refrigerants.
(4) An NBR composition comprising NBR and white carbon having a BET specific surface area of 30 to 110 m²/g, preferably 30 to 60 m²/g (Patent Document 4). This NBR composition is vulcanized with an organic peroxide and sulfur (donating compound), and gives a molded vulcanizate having compression set characteristics comparable to that of molded vulcanizates of expensive hydrogenated NBR, while using NBR.

The hydrogenated NBR composition or seal molding material disclosed in Patent Documents 1 to 3 can achieve their desired objects; however, they cannot satisfy various characteristics required for product functions with respect to HFC134a/PAG oil and HFO1234yf/POE oil, such as volume change rate with respect to POE oil, abrasion resistance of the product, and foaming resistance to HFC134a.

### PRIOR ART DOCUMENT

### PATENT DOCUMENT

Patent Document 1 : JP-A-2000-212333
Patent Document 2 : JP-A-2004-217811
Patent Document 3 : JP-A-2009-102646
Patent Document 4 : WO 2007/099724 A1

### OUTLINE OF THE INVENTION

### PROBLEM TO BE SOLVED BY THE INVENTION

An object of the present invention is to provide a hydrogenated NBR composition that satisfies various characteristics required for product functions with respect to HFC134a/PAG oil and HFO1234yf/POE oil.

### MEANS FOR SOLVING THE PROBLEM

The above object of the present invention can be achieved by a hydrogenated NBR composition comprising 40 to 80 parts by weight of silica having a BET specific surface area of 40 to 100 m²/g, and 0.5 to 3 parts by weight of a silane coupling agent, based on 100 parts by weight of a hydrogenated NBR blend of 35 to 50 wt.% of medium- to high-nitrile-content hydrogenated NBR having an acrylonitrile content of 30 to 38%, and 65 to 50 wt.% of high-nitrile-content hydrogenated NBR having an acrylonitrile content of 40 to 46%.

### EFFECT OF THE INVENTION

In the present invention, due to the use of medium- to high-nitrile-content hydrogenated NBR and high-nitrile-content hydrogenated NBR as a blend, both foaming resistance to HFC134a and swelling resistance to POE oil can be achieved. Further, due to the use of silane having a specific BET specific surface area and a silane coupling agent, desired compression set characteristics and abrasion resistance of the product can be secured.

From the above, a lip seal material having excellent product functions with respect to HFC134a/PAG oil and HFO1234yf/POE oil can be obtained, and can be effectively used for air conditioner compressors.

### EMBODIMENTS FOR CARRYING OUT THE INVENTION

As the medium- to high-nitrile-content hydrogenated NBR, one having an acrylonitrile content of 30 to 38% is used. Moreover, as the high-nitrile-content hydrogenated NBR, one having an acrylonitrile content of 40 to 46% is used. In practice, commercial products having a predetermined acrylonitrile content selected, for example, from the Zetpol series (produced by Zeon Corporation), are used.

The medium- to high-nitrile-content hydrogenated NBR and the high-nitrile-content hydrogenated NBR are used as a blend of 35 to 50 wt.% of the former NBR and 65 to 50 wt.% of the latter NBR. If the ratio of the former NBR is greater than this range, swelling resistance to POE oil is insufficient, and abrasion resistance of the product is also inferior. In contrast, if the ratio of the former NBR is less than this range, foaming resistance to HFC134a (and low temperature characteristics) are not satisfied.

As the silica, one having a BET specific surface area of 40 to 100m²/g is used at a ratio of 40 to 80 parts by weight, preferably 50 to 70 parts by weight, based on 100 parts by weight of hydrogenated nitrile rubber.

These silica include dry process silica produced, for example, by thermal decomposition of halogenated silicic acid or an organic silicon compound, or by heating and reducing silica sand, followed by air oxidation of the evaporated SiO; wet process silica produced, for example, by thermal decomposition of sodium silicate. In practice, commercial products currently marketed for rubber industrial use, such as Nipsil ER#100 and E74P (produced by Tosoh Silica Corporation), and Ultrasil 360 (produced by Evonik Degussa), can be used as they are.

If silica having a specific surface area smaller than this range is used, mechanical strength is insufficient, and foaming resistance and abrasion resistance are also inferior. In contrast, if silica having a specific surface area greater than this range is used, compression set characteristics or abrasion resistance of the product is inferior. Moreover, if the compounding ratio of silica is less than or more than the above range, foaming resistance to HFC134a and abrasion resistance of the product are reduced.

In order to enhance the adhesion between hydrogenated NBR and silane, and HFC134a resistance, it is necessary to use in combination a silane coupling agent at a ratio of 0.5 to 3 parts by weight, preferably 1 to 2 parts by weight, based on 100 parts by weight of hydrogenated NBR. Examples of silane coupling agent include vinyltris(β-methoxyethoxysilane), vinyltrimethoxysilane, γ-glycidoxypropyltrimethoxysilane, γ-methacryloxypropyltrimethoxysilane, γ-aminopropyltrimethoxysilane, γ-mercaptopropyltrimethoxysilane, and the like.

If a silane coupling agent is not used, HFC134a resistance and compression set characteristics are impaired.

The hydrogenated NBR containing silica is crosslinked by an organic peroxide. Examples of the organic peroxide include tert-butyl peroxide, dicumyl peroxide, tert-butyl cumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexine-3, 1,3-di(tert-butylperoxyisopropyl)benzene, 2,5-dimethyl-2,5-di(benzoylperoxy)hexane, tert-butylperoxybenzoate, tert-butylperoxyisopropyl carbonate, n-butyl-4,4-di(tert-butylperoxy)valerate, and the like., and the organic peroxide is used in a proportion of 1 to 10 parts by weight, preferably 4 to 6 parts by weight, based on 100 parts by weight of hydrogenated NBR.

In organic peroxide crosslinking, it is desirable to use in combination 10 parts by weight or less, generally 0.5 to 10 parts by weight, preferably 2 to 8 parts by weight, of polyfunctional unsaturated compound, based on 100 parts by weight of hydrogenated NBR. The crosslinking density of the sealing material is thereby increased; thus, compression set characteristics are improved, and a life extension can be achieved. Examples of the polyfunctional unsaturated compound include triallyl isocyanurate, triallyl cyanurate, triallyl trimellitate, N,N'-m-phenylene bismaleimide, and the like. If the polyfunctional unsaturated compound is used at a ratio greater than this range, rubber hardness becomes very high, and rubber elasticity tends to be lost.

The hydrogenated NBR-based composition comprising the above components may suitably contain compounding agents that are generally used in the rubber industry, for example, reinforcing agents other than carbon black and white carbon, such as activated calcium carbonate; fillers, such as talc, clay, graphite and calcium silicate; processing aids, such as stearic acid, palmitic acid and paraffin wax; acid acceptors, such as zinc oxide and magnesium oxide; antioxidants; plasticizers; and the like, depending on the necessity.

In particular, it is effective to compound 10 parts by weight or less of ester-based plasticizer and 10 parts by weight or less of acid acceptor, preferably zinc oxide.

The preparation of the hydrogenated NBR-based composition is carried out by kneading the components using a kneading machine such as intermix, kneader or Banbury mixer, or an open roll. Crosslinking of the kneaded product is generally carried out by heating at about 150 to 200°C for about 3 to 60 minutes using an injection molding machine, compression molding machine, vulcanizing press, or the like, optionally followed by secondary crosslinking by heating at about 100 to 200°C for about 0.5 to 24 hours.

The hydrogenated NBR composition of the present invention is effectively used, for example, as a crosslinking molding material for lip seal materials of compressors. The lip seal material for compressors crosslinking-molded from this composition is particularly effectively used for air conditioner compressors using HFC134a/PAG oil and HFO1234yf/POE oil.

### EXAMPLES

The following describes the present invention with reference to Examples.

### Example 1

| | |
|---|---|
| Hydrogenated NBR (Zetpol 2000, produced by Zeon Corporation; AN content: 36%) | 50 parts by weight |
| Hydrogenated NBR (Zetpol 1020, produced by Zeon Corporation; AN content: 44%) | 50 parts by weight |
| Silica (E74P, produced by Toso-Silica Co. BET specific surface area: 50m²/g) | 70 parts by weight |
| Zinc oxide | 5 parts by weight |
| Silane coupling agent (A-172NTJ, produced by | 1 part by weight |
| Momentive Performance Materials Inc.;) | |
| Dicumyl peroxide | 4 parts by weight |

The above components were kneaded with a kneader and an open roll. The kneaded product was subjected to crosslinking molding by press vulcanization (primary vulcanization) at 170°C for 15 minutes, and oven vulcanization (secondary vulcanization) at 165°C for 30 minutes. Thus, a cross-linked sheet (150mm×150mm×2mm) and an O-ring of P24 size were obtained.

The obtained crosslinked sheet and P-24 O ring were measured for the following items.

Volume change rate with respect to POE oil:
The volume change rate after dipping in POE oil at 150°C for 70 hours was measured. ΔV of 6% or less was evaluated as ○, and ΔV exceeding 6% was evaluated as ×.

Foaming resistance to HFC134a and HFO1234yf:
Refrigerant dipping was performed at 25°C for 24 hours, followed by heating at 150°C for 1 hour. Then, the appearance state (the presence or absence of foaming) was visually observed. The case that foaming was not observed was evaluated as ○, and the case that foaming was observed was evaluated as ×.

Abrasion resistance of product:
A seal endurance tester was used in POE oil at 150°C at a rotational frequency of 7,500 rpm for 72 hours. After that, the case that abrasion was not observed was evaluated as ○, and the case that abrasion was observed was evaluated as ×.

Compression set:
The compression set of the P-24 O ring at 150°C for 70 hours was measured according to JIS K6262 corresponding to ASTM D395. A compression set of 16% or less was evaluated as ⊚, a compression set of 17 to 23% was evaluated as ○, a compression set of 24 to 29% was evaluated as Δ, and a compression set of 30% or more was evaluated as ×.

Low temperature characteristics:
The glass transition temperature Tg was measured. A glass transition temperature of lower than -18°C was evaluated as ○, and a glass transition temperature of -18°C or higher was evaluated as ×.

### Examples 2 to 11

In Example 1, the amount (part by weight) of each component other than the silane coupling agent and dicumyl peroxide was changed as shown in the table below.

**Table**

| Example | 2 | 3 | 4 | 5 | 6 | 7 | 8 | 9 | 10 | 11 |
|---|---|---|---|---|---|---|---|---|---|---|
| Zetpol 2000 | 35 | 35 | 35 | 35 | 35 | 35 | 35 | 35 | 35 | 35 |
| Zetpol 1020 | 65 | 65 | 65 | 65 | 65 | 65 | 65 | 65 | 65 | 65 |
| E74P | 40 | 70 | 80 | | | | | | | |
| Nipsil ER#100 | | | | 50 | 60 | 70 | 75 | 80 | 60 | 70 |
| ZnO | 5 | 5 | 5 | | 5 | 5 | 5 | 5 | | 5 |
| TMP | | | | 6 | | | | | | |
| RS-700 | | | | 10 | 10 | 10 | 10 | | 10 | |

| | | | | | | | | | | |
|---|---|---|---|---|---|---|---|---|---|---|
| Note) Nipsil ER#100: silica produced by Toso-Silica Co., BET specific surface area: 95m²/g TMP: trimethylolpropane RS-700: plasticizer Adekacizer, produced by Adeka Corporation | | | | | | | | | | |

In Examples 1 to 11 above, all of the evaluation items were evaluated as ○ (provided that the compression set of Example 3 was ⊚).

### Comparative Example 1

In Example 3, 100 parts by weight of Zetpol 2000 was used, and Zetpol 1020 was not used. ΔV with respect to POE oil and abrasion resistance of the product were evaluated as ×.

### Comparative Example 2

In Example 3, the amount of the Zetpol 2000 was changed to 65 parts by weight, and that of the Zetpol 1020 was changed to 35 parts by weight, respectively. ΔV with respect to POE oil and abrasion resistance of the product were evaluated as ×.

### Comparative Example 3

In Example 3, the amount of the Zetpol 2000 was changed to 30 parts by weight, and that of the Zetpol 1020 was changed to 70 parts by weight, respectively. Foaming resistance with respect to refrigerant HFC134a was evaluated as ×.

### Comparative Example 4

In Example 3, 100 parts by weight of Zetpol 1020 was used, and Zetpol 2000 was not used. Foaming resistance with respect to refrigerant HFC134a and low temperature characteristics were evaluated as ×.

### Comparative Example 5

In Example 2, the amount of E74P was changed to 30 parts by weight. Foaming resistance with respect to refrigerant HFC134a and abrasion resistance of the product were evaluated as ×.

### Comparative Example 6

In Example 2, the amount of E74P was changed to 90 parts by weight. Compression set was evaluated as ×.

### Comparative Example 7

In Example 3, silane coupling agent (A-172NTJ) was not used. Foaming resistance with respect to refrigerant HFC134a and compression set were evaluated as X.

### Comparative Example 8

In Example 5, the amount of Nipsil ER#100 was changed to 30 parts by weight. Foaming resistance with respect to refrigerant HFC134a and abrasion resistance of the product were evaluated as ×.

### Comparative Example 9

In Example 5, the amount of Nipsil ER#100 was changed to 90 parts by weight. Foaming resistance with respect to refrigerant HFC134a and abrasion resistance of the product were evaluated as ×.

### Comparative Example 10

In Example 2, the same amount (40 parts by weight) of Nipsil ER NA (produced by Toso-Silica Co.,: BET specific surface area: 120m²/g) was used in place of E74P. Compression set was evaluated as ×.

### Comparative Example 11

In Comparative Example 10, the amount of Nipsil ER NA was changed to 80 parts by weight. Compression set was evaluated as × as in Comparative Example 10.

### Comparative Example 12

In Comparative Example 10, the amount of Nipsil ER NA was changed to 70 parts by weight. Compression set was evaluated as × as in Comparative Example 10.

### Comparative Example 13

In Example 6, the same amount (40 parts by weight) of Nipsil LP (produced by Toso-Silica Co.,: BET specific surface area: 210m²/g) was used in place of Nipsil ER#100. Abrasion resistance of the product was evaluated as ×.

### Comparative Example 14

In Comparative Example 13, the amount of Nipsil LP was changed to 65 parts by weight. Abrasion resistance of the product was evaluated as ○, but compression set was evaluated as ×.

### Comparative Example 15

In Comparative Example 13, the amount of Nipsil LP was changed to 80 parts by weight. Abrasion resistance of the product was evaluated as × as in Comparative Example 13.

### Comparative Example 16

In Example 3, the same amount (70 parts by weight) of ULTRASIL 880 (produced by Evonik Industries: BET specific surface area: 35m²/g) was used in place of E74P. Abrasion resistance of the product was evaluated as ×.

### Comparative Example 17

In Example 8, the same amount (75 parts by weight) of Seast G-SO (produced by Tokai Carbon Co., Ltd.), which is SRF carbon black, was used in place of Nipsil ER#100, and silane coupling agents (A-172NTJ) was not used. Abrasion resistance of the product was evaluated as ×.

### Comparative Example 18

In Comparative Example 17, the amount of Seast G-SO was changed to 90 parts by weight. Abrasion resistance of the product was evaluated as × as in Comparative Example 17.

In each of the above Comparative Examples, each of the items other than those evaluated as × were evaluated as ○.

The results of each of the above Examples and Comparative Examples demonstrate the following:
(1) The Examples, which used medium- to high-nitrile-content hydrogenated NBR and high-nitrile-content hydrogenated NBR at a specific blend ratio, and which used silica having a specific BET specific surface area and a silane coupling agent at a specific ratio based on the amount of the hydrogenated NBR blend, show characteristics that satisfy all of the volume change rate with respect to POE oil, foaming resistance to HFC134a and HFO1234yf, abrasion resistance of the product, compression set characteristics, and low temperature characteristics.
(2) If a predetermined amount or more of medium- to high-nitrile-content hydrogenated NBR is used, volume change rate with respect to POE oil and abrasion resistance of the product are inferior. In contrast, if a predetermined amount or less of medium- to high-nitrile-content hydrogenated NBR is used, foaming resistance to HFC134a (and low temperature characteristics) are inferior.
(3) If silica having a BET specific surface area that is equal to or more than a predetermined value is used, compression set or abrasion resistance of the product is deteriorated.
(4) If a predetermined amount or more of silica is used, foaming resistance to HFC134a and abrasion resistance of the product are reduced. The same applies to a case in which a predetermined amount or less of silica is used. In the former case, compression set is sometimes deteriorated.
(5) If a silane coupling agent is not used, foaming resistance to HFC134a and compression set are deteriorated.

## Claims

1. A hydrogenated NBR composition comprising 40 to 80 parts by weight of silica having a BET specific surface area of 40 to 100 m²/g, and 0.5 to 3 parts by weight of a silane coupling agent, based on 100 parts by weight of a hydrogenated NBR blend of 35 to 50 wt.% of medium- to high-nitrile-content hydrogenated NBR having an acrylonitrile content of 30 to 38%, and 65 to 50 wt.% of high-nitrile-content hydrogenated NBR having an acrylonitrile content of 40 to 46%.

2. The hydrogenated NBR composition according to claim 1, wherein 10 parts by weight or less of ester-based plasticizer is further added.

3. The hydrogenated NBR composition according to claim 1, wherein 10 parts by weight or less of acid acceptor is further added.

4. The hydrogenated NBR composition according to claim 3, wherein the acid acceptor is zinc oxide.

5. The hydrogenated NBR composition according to claim 1, 2 3 or 4, wherein 1 to 10 parts by weight of an organic peroxide crosslinking agent is further added.

6. The hydrogenated NBR composition according to claim 5, which is used for a crosslinking molding material for lip seal of compressors.

7. A lip seal material for compressors, which is crosslinking-molded from hydrogenated NBR composition according to claim 6.

8. The lip seal material for compressors according to claim 7, which is used for an air conditioner compressor with HFC134a/PAG oil and HFO1234yf/POE oil.
